# EUROPÄISCHE PATENTSCHRIFT

(11) **EP 0 997 655 B1**
(45) Veröffentlichungstag und Bekanntmachung des Hinweises auf die Patenterteilung: **23.02.2005**
(21) Anmeldenummer: 99119655.1
(22) Anmeldetag: 04.10.1999
(51) Int. Cl.: F16C 29/06

(54) **Linearführung**
Linear guide
Guide linéaire

(30) Priorität: 29.10.1998 DE 29819265 U
(43) Veröffentlichungstag der Anmeldung: 03.05.2000
(73) Patentinhaber: Festo AG & Co, 73734 Esslingen (DE)
(72) Erfinder: Maffeis, Giuseppe, 25030 Roncadelle (IT); Bellandi, Giuseppe, 25030 Roncadelle (IT)
(74) Vertreter: Abel, Martin, Dipl.-Ing.

(56) Entgegenhaltungen:
- EP-A- 0 422 419
- DE-U- 29 518 242
- FR-A- 2 546 995
- US-A- 5 460 452

## Beschreibung

Die Erfindung betrifft eine Linearführung, mit einem Grundkörper, der eine Basis und zwei unter seitlicher Begrenzung einer nutartigen Vertiefung von der Basis wegragende Schenkel aufweist, mit mindestens einem in die nutartige Vertiefung eingreifenden, relativ zum Grundkörper in Längsrichtung der nutartigen Vertiefung bewegbaren Läufer, und mit im Innern der nutartigen Vertiefung zwischen dem Läufer und den diesen flankierenden Schenkeln wirkenden Führungsmitteln, wobei zwischen den beiden Schenkeln des Grundkörpers wirkende Spannmittel vorhanden sind, die ein elastisches Verformen der Schenkel mit Bezug zur Basis ermöglichen, um im Bereich der Führungsmittel eine variable Einstellung der Breite der nutartigen Vertiefung vornehmen zu können.

Bei einer aus der US-A-5460452 bekannten Linearführung dieser Art greift eine Führungsschiene zwischen zwei Schenkel einer Schlitteneinheit ein, wobei zwischen diesen Komponenten Wälzlagermittel vorgesehen sind. Zwischen den beiden Schenkeln erstreckt sich eine Regulierschraube, durch die sich der Abstand zwischen den beiden Schenkein einstellen lässt.

Eine aus der US-A-5657973 hervorgehende Linearführung ist Bestanzteil eines fluidbetätigten Greifers. Das Gehäuse des Greifers, das eine durch Fluidkraft betätigte Antriebseinrichtung enthält, bildet einen Grundkörper mit zwei parallel zueinander angeordneten Schenkeln, die eine im Querschnitt beispielsweise T-förmige nutartige Vertiefung begrenzen. Darin sind zwei als Läufer bezeichenbare Greifelementträger linear verschiebbar geführt, die durch die Antriebseinrichtung zu einer gegensinnigen Linearbewegung veranlasst werden können, um mittels daran festgelegter Greifelemente Handhabungsarbeiten durchzuführen.

Um einen Greifer mit hoher Betriebspräzision zu erhalten, bedarf es einer exakten Abstimmung des Führungskontaktes zwischen den Läufern und dem Grundkörper. Im Falle der US-A-5675973 sind hierzu die Läufer durch entsprechend aufwendige mechanische Bearbeitung so exakt in die nutartige Vertiefung einzupassen, dass die einander zugewandten, Führungsmittel bildenden Seitenflächen in einer Weise aneinander anliegen, die möglichst spielfreie Linearbewegungen ohne Verklemmungsgefahr gewährleistet. Diese Anpassung hat eine kostenintensive Fertigung des Produkts zur Folge und wird gleichwohl immer ein Kompromiss sein, insbesondere wenn große Stückzahlen zu fertigen sind.

Es ist die Aufgabe der vorliegenden Erfindung, eine sich insbesondere für fluidbetätigte Greifer eignende Linearführung zu schaffen, die bei relativ einfacher Herstellung eine hohe Führungspräzision zur Verfügung stellen kann.

Zur Lösung dieser Aufgabe ist vorgesehen, dass im Bereich eines oder beider Schenkel an der der nutartigen Vertiefung entgegengesetzten Außenfläche des Grundkörpers eine sich parallel zur Längsachse der nutartigen Vertiefung erstreckende Längsnut vorgesehen ist, wobei die Spannmittel auf der der Basis entgegengesetzten Seite der Längsnut am betreffenden Schenkel angreifen derart, daß die Längsnut zwishen den Spannmitteln und der Basis angeordnet ist. Auf diese Weise lässt sich das im Bereich der Führungsmittel gewünschte Führungsspiel zwischen den relativ zu bewegten Teilen der Linearführung sehr exakt und individuell einstellen. Durch die Spannmittel läßt sich die Breite der nutartigen Vertiefung im Bereich der Führungsmittel variieren, wobei die zu überwindende Rückstellkraft der beaufschlagten Schenkel eine sehr exakte und feinfühlige Justierung erlaubt. Da nun bei der Fertigung der einzelnen Komponenten mit größeren Toleranzen gearbeitet werden kann, die sich durch die nachfolgende Einstellung kompensieren lassen, ergibt sich eine vereinfachte Herstellung verbunden mit einer bei Bedarf hohen Führungspräzision. Die Linearführung eignet sich insbesondere zum Einsatz bei fluidbetätigten Greifern zur Führung der die Läufer bildenden Greifelemente oder Greifelementträger gegenüber dem Gehäuse des Greifers, ist aber auch ohne weiteres im Zusammenhang mit anderen Produkten einsetzbar, die mit einer Linearführung ausgestattet sind.

Um das Verformungsverhalten der Schenkel in einer gewünschten Weise zu beeinflussen, ist der Grundkörper im Bereich der Schenkel mit die Struktur des Grundkörpers lokal schwächenden Nuten versehen, die nachfolgend als Verformungsnuten bezeichnet seien. Somit lässt sich erreichen, dass die erforderlichen Einstellungen zielgerecht und dennoch mit relativ geringer Verstellkraft vorgenommen werden können. Erfindungsgemäß ist im Bereich eines und vorzugsweise beider Schenkel eine als Längsnut ausgeführte Verformungsnut vorgesehen, die sich parallel zur Längsachse der nutartigen Vertiefung erstreckt. Sie kann sich insbesondere im Übergangsbereich zwischen dem betreffenden Schenkel und der Basis des Grundkörpers befinden. Wird in diesem Fall über die Spannmittel eine Kraft aufgebracht, ergibt sich ein aufeinander zu gerichtetes Verbiegen der Schenkel über ihre gesamte Höhe, wobei sich der Biegebereich im Übergangsbereich zwischen den Schenkeln und der Basis befindet. Möglich wäre es aber auch, die Längsnut näher zum freien Ende des jeweiligen Schenkels hin vorzusehen, so dass der betreffende Schenkel selbst über einen bei Betätigung der Spannmittel unbeeinflusst bleibenden Fußabschnitt und einen verformbaren Abschnitt unterteilt wird.

Vorteilhafte Weiterbildungen der Erfindung gehen aus den Unteransprüchen hervor.

Die Spannmittel sind zweckmäßigerweise zumindest teilweise von Spannelementen gebildet, die in oder an den beiden Schenkeln verankert sind und die nutartige Vertiefungen stegartig durchqueren. Dabei handelt es sich zweckmäßigerweise um Spannschrauben, die sich mit ihrem Kopf am einen Schenkel abstützen können, während sie mit ihrem Gewindeschaft in den anderen Schenkel eingeschraubt sind.

In Abhängigkeit von der Baulänge der Linearführung können mehrere über die Länge der nutartigen Vertiefung verteilt angeordnete Spannmittel vorgesehen sein, die sich insbesondere unabhängig voneinander betätigen lassen.

Es ist weiterhin von Vorteil, wenn insbesondere bei Grundkörpern größerer Länge im Bereich der Schenkel mindestens eine als Quernut ausgeführte Verformungsnut vorgesehen ist, die sich parallel zur Tiefenrichtung der nutartigen Vertiefung erstreckt, so daß der betreffende Schenkel über seine Länge hinweg in mehrere Verformungsabschnitte unterteilt wird. Ist jedem Verformungsabschnitt ein eigenes Spannmittel zugeordnet, kann eine sehr individuelle und feinfühlige Einstellung des Führungsspiels vorgenommen werden, wobei sich die Einstellungen gegenseitig nicht oder zumindest nur geringfügig beeinflussen.

Als vorteilhaft wird es angesehen, wenn jedem Schenkel eine Anordnung von Verformungsnuten zugeordnet ist, bei der es sich um eine Kombination aus Längsnuten und Quernuten handelt, die auch ineinander übergehen können.

Die Führungsmittel können beispielsweise so ausgeführt sein, daß sich eine Gleitführung ergibt, wobei die Führungsmittel von einander zugewandten und miteinander in Kontakt stehenden Seitenflächen des Läufers und der Schenkel gebildet sein können. Insbesondere wenn höhere Querbelastungen auftreten, bietet sich allerdings die Ausgestaltung als Wälzführung an. Hierbei kann die Linearführung vorzugsweise derart ausgeführt sein, daß die Führungsmittel auf jeder Seite des Läufers über mindestens eine Führungseinheit verfügen, die einen am Grundkörper festgelegten ersten Tragkörper und einen am Läufer festgelegten zweiten Tragkörper enthalten, wobei jeder Tragkörper wenigstens ein und zweckmäßigerweise zwei parallel nebeneinanderliegend angeordnete und jeweils eine Abwälzfläche definierende stabförmige Lagerelemente trägt, und wobei zwischen den Tragkörpern eine an den Lagerelementen anliegende Wälzkörperanordnung vorgesehen ist. Die Tragkörper bestehen hier zweckmäßigerweise aus Kunststoffmaterial, während man als Lagerelemente vorzugsweise Bauteile aus gehärtetem Stahl verwendet.

Nachfolgend wird die Erfindung anhand der beiliegenden Zeichnung näher erläutert. In dieser zeigen:
Figur 1 in perspektivischer und explosionsartiger Darstellungsweise einen fluidbetätigten Greifer, der mit einer bevorzugten Bauform der erfindungsgemäßen Linearführung ausgestattet ist,
Figur 2 eine Draufsicht auf den Greifer aus Figur 1,
Figur 3 einen Querschnitt durch den Greifer gemäß Schnittlinien III-III aus Figuren 1 und 2, und
Figur 4 einen weiteren Querschnitt durch den Greifer aus Figuren 1 und 2 gemäß Schnittlinien IV-IV.

Der in der Zeichnung allgemein mit Bezugsziffer 1 bezeichnete fluidbetätigte Greifer verfügt über ein Gehäuse 2 mit einem beispielsgemäß quaderähnlichen Mittelteil 3, an dessen beiden axialen Stirnseiten Abschlußdeckel 4, 4' angesetzt sind.

Das Mittelteil 3 bildet einen Grundkörper 5 einer allgemein mit Bezugsziffer 6 bezeichneten Linearführung, die beim Ausführungsbeipiel auch noch zwei als Läufer 7, 7' bezeichnete Bauteile enthält, die von den Greifelementtägern 8, 8' des Greifers 1 gebildet sind. Über Führungsmittel 12 sind die Läufer 7, 7' an dem Grundkörper 5 in Richtung dessen Längsachse 13 verschiebbar geführt und gleichzeitig in Querrichtung abgestützt.

Die Greifelementträger 8, 8' sind in Längsrichtung des Gehäuses 2 aufeinanderfolgend angeordnet und stehen jeweils mit einer im Gehäuse 2 untergebrachten und nur schematisch angedeuteten fluidbetätigten Antriebseinrichtung 14 in Antriebsverbindung. Der Aufbau der Antriebseinrichtung 14 kann beispielsweise demjenigen entsprechen wie er in der US 5,657,973 erläutert wird. Dabei kann sie zwei mit jeweils einem der Greifelementträger 8, 8' bewegungsgekoppelte Mitnehmer 15 enthalten, die die durch Fluidkraft hervorgerufene Axialbewegung zweier Kolben der Antriebseinrichtung 14 auf die Greifelementträger 8, 8' übertragen. Es ist insbesondere eine Betriebsweise möglich, bei der die Greifelementträger 8, 8' eine axial gegensinnige Linearbewegung relativ zum Gehäuse 2 ausführen, um an ihnen vorgesehene, nicht näher dargestellte Greifelemente im Rahmen einer Öffnungs- oder Schließbewegung voneinander zu entfernen oder aneinander anzunähern. Die Greifelemente, die auch als Greifbacken bezeichnet werden könnten, lassen sich über Befestigungsmittel 16 auswechselbar an den Greifelementträgern 8, 8' befestigen.

Der von dem Mittelteil 3 gebildete Grundkörper 5 verfügt über einen nachfolgend als Basis 17 bezeichneten Abschnitt, in dem beim Ausführungsbeispiel die Antriebseinrichtung 14 untergebracht ist und die im wesentlichen eine platten- oder klotzähnliche Form hat.

An die Basis 17 schließen sich längsseits zwei als Schenkel 18, 18' bezeichnete Grundkörperabschnitte an, die in Längsrichtung des Grundkörpers 5 verlaufen und in Querrichtung von der Basis 17 wegragen, so daß der Grundkörper 5 im Querschnitt gesehen eine insgesamt U-ähnliche Gestalt hat. Die Schenkel 18, 18' verlaufen parallel zueinander und liegen sich mit Abstand gegenüber, wobei sie die seitlichen Begrenzungswände einer zwischen ihnen angeordneten nutartigen Vertiefung 22 bilden. Den Grund dieser nutartigen Vertiefung 22 bildet der die beiden Schenkel 18, 18' miteinander verbindende Abschnitt der Basis 17.

Die beiden beim Ausführungsbeispiel von den Greifelementträgern 8, 8' gebildeten Läufer 7, 7' - anstelle der Greifelementträger 8, 8' könnten auch direkt Greifelemente vorgesehen sein - greifen in die nutartige Vertiefung 22 ein, wobei sie beim Ausführungsbeispiel mit einem den größten Teil ihres Querschnitts einnehmenden Fußabschnitt 23 in der nutartigen Vertiefung 22 aufgenommen sind und im übrigen, mit einem Kopfabschnitt 24, über die längsseitige Öffnung 25 der nutartigen Vertiefung 22 hinausragen und über die Außenfläche des Grundkörpers 5 vorstehen.

Die oben erwähnten Führungsmittel 12 befinden sich im Innern der nutartigen Vertiefung 22 und arbeiten dort beidseits eines jeweiligen Läufers 7, 7' zwischen diesem und dem jeweils benachbarten Schenkel 18, 18'. Beim Ausführungsbeispiel ist vorgesehen, daß die einem jeweiligen Läufer 7, 7' zugeordneten Führungsmittel 12 aus zwei beidseits des Läufers 7, 7' angeordneten Führungseinheiten 29 bestehen, die zweckmäßigerweise einen später noch erläuterten vorteilhaften Aufbau besitzen.

Die Linearführung 6 verfügt desweiteren über zwischen den beiden Schenkeln 18, 18' wirkende Spannmittel 26, die sich in einer Weise betätigen lassen, daß eine elastische Verformung der Schenkel 18, 18' relativ zur Basis 17 erfolgt, wobei sich die Breite der nutartigen Vertiefung 22 verändert. Die Schenkel 18, 18' werden dabei in Querrichtung der nutartigen Vertiefung 22 entweder einander angenähert oder voneinander entfernt. Die Verformungsbereiche 28, 28' liegen dabei zweckmäßigerweise in den Übergangsbereichen zwischen der Basis 17 und dem jeweiligen Schenkel 18, 18', so daß man den Verformungsvorgang auch als Biegevorgang bezeichnen kann.

Durch die Einstellung der Breite der nutartigen Vertiefung 22 wird Einfluß genommen auf das Führungsspiel im Bereich der Führungsmittel 12 zwischen den Schenkeln 18, 18' und den Läufern 7, 7'. Man kann auf diese Weise insbesondere eine Einstellung derart vornehmen, daß die Läufer 7, 7' zumindest weitestgehend spielfrei und dennoch in Längsrichtung der nutartigen Vertiefung 22 verschieblich am Grundkörper 5 geführt sind.

Die Einstellmaßnahmen gestalten sich vor allem auch deshalb besonders einfach, weil die Schenkel 18, 18' einstückig mit der Basis 17 verbunden sind und sie somit bei einer Wegnahme der Spannkraft selbsttätig unter Vergrößerung der Breite der nutartigen Vertiefung 22 in Richtung ihrer spannungsfreien Ausgangsstellung zurückverformt werden.

Beim Ausführungsbeispiel sind die Spannmittel 26 von mehreren stabähnlichen Spannelementen 27 gebildet, die in den beiden Schenkeln 18, 18' verankert sind und die nutartige Vertiefung 22 insbesondere in der Nachbarschaft der Basis 17 stegartig durchqueren. Die Spannelemente 27 haben die Wirkung von Zugankern und können bei im Spannsinne erfolgender Betätigung hervorrufen, daß die Schenkel 18, 18' aufeinander zu gerichtet elastisch geringfügig gebogen werden.

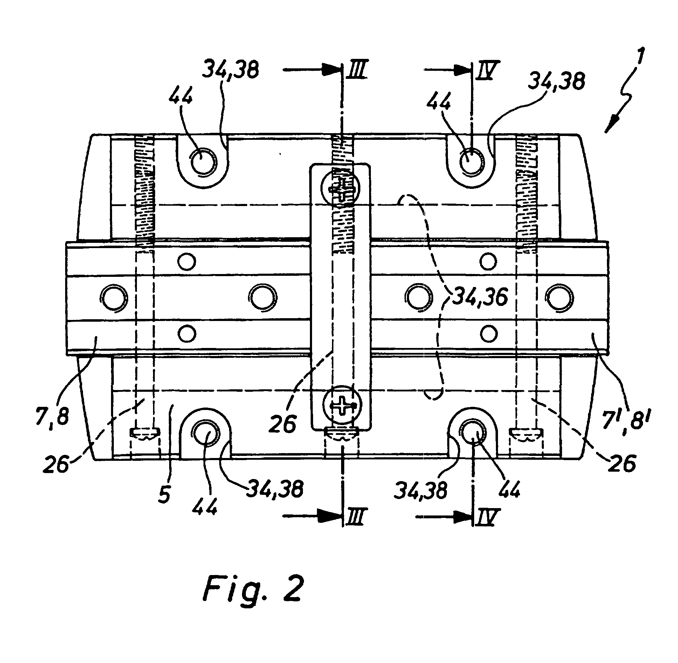

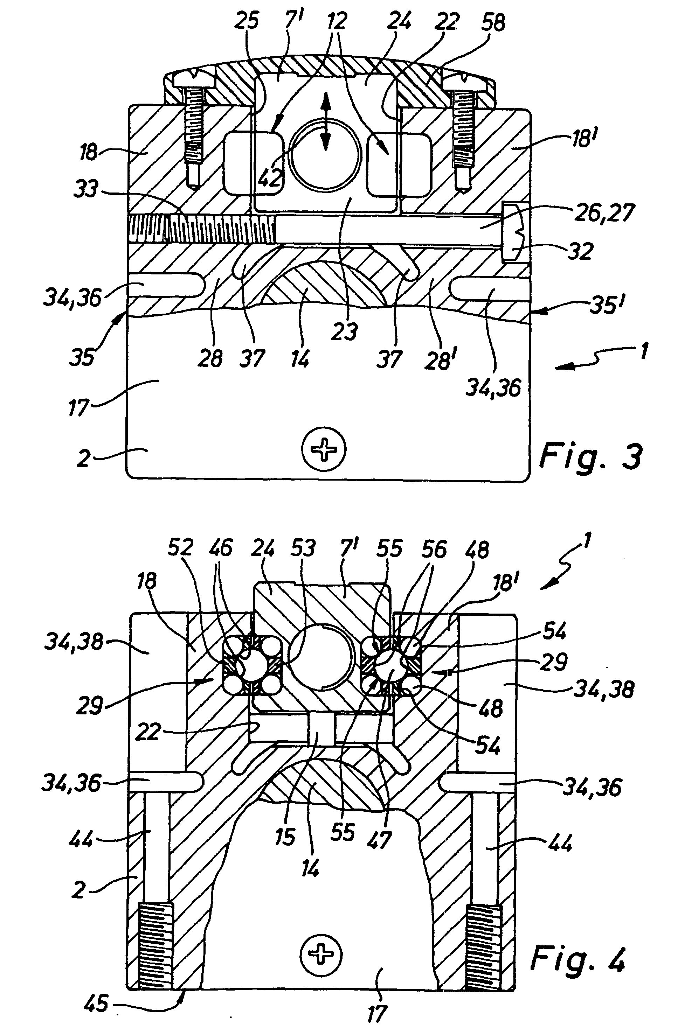

Bevorzugt handelt es sich bei den Spannelementen 27 um Spannschrauben, wobei gemäß Figuren 2 und 3 vorgesehen sein kann, daß sie sich mit ihrem Kopf 32 am einen Schenkel 18' abstützen, während sie mit ihrem Gewindeschaft 33 in den anderen Schenkel eingeschraubt sind. Die Spannelemente 27 erstrecken sich dabei jeweils in zwei die Schenkel 18, 18' durchsetzenden und im Bereich der nutartigen Vertiefung 22 miteinander fluchtenden Bohrungen. Die Einbautiefe der Läufer 7, 7' bezüglich der nutartigen Vertiefung 22 ist so gewählt, daß sie über den Spannelementen 27 hinweglaufen können.

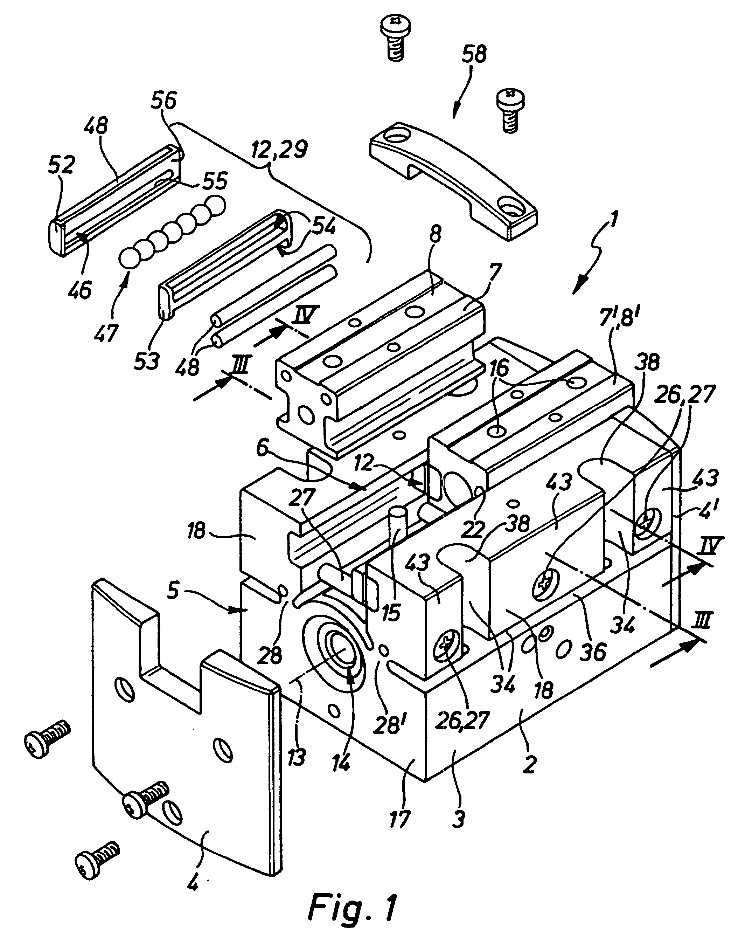

Wie aus Figuren 1 und 2 ersichtlich ist, kommen zweckmäßigerweise gleichzeitig mehrere Spannelemente 27 zum Einsatz, die über die Länge der nutartigen Vertiefung 22 mit Abstand verteilt angeordnet sind und sich unabhängig voneinander betätigen lassen. Die Anzahl der Spannelemente 27 und deren Verteilungsdichte über die Länge des Grundkörpers 5 hinweg hängt insbesondere von der Baulänge des Grundkörpers 5 bzw. der Führungsstrecke ab. Jedenfalls besteht durch diese Mehrfachanordnung von Spannelementen 27 der Vorteil, daß sich über die Länge der nutartigen Vertiefung 22 hinweg auftretende toleranzbedingte Breitendifferenzen bequem lokal kompensieren lassen, wobei sich die vorgenommenen Einstellungen der einzelnen Spannelemente nicht oder zumindest nur geringfügig aufeinander auswirken.

Handelt es sich bei dem Grundkörper 5 um ein verhältnismäßig dünnwandiges Bauteil, kann die dem Material inhärente Biegeelastizität bereits ausreichend sein, um die gewünschten Verformungen durchführen zu können. Bei größerer Wandstärke, wie sie beim Ausführungsbeispiel auftritt, empfiehlt es sich, den Grundkörper 5 insbesondere im Bereich der beiden Schenkel 18, 18' mit Nuten zu versehen, die das Verformungsverhalten beeinflussen, und die nachfolgend in ihrer Gesamtheit als Verformungsnuten 34 bezeichnet seien.

Beim Ausführungsbeispiel ist der Grundkörper 5 im Übergangsbereich zwischen einem jeweiligen Schenkel 18, 18' und der Basis 17 an seinen der nutartigen Vertiefung 22 in Querrichtung entgegengesetzten seitlichen Außenflächen 35, 35' mit einer sich parallel zur nutartigen Vertiefung 22 erstreckenden Längsnut 36 als Verformungsnut 34 versehen. Sie erstreckt sich zweckmäßigerweise über die gesamte Länge des Grundkörpers 5 und ist vergleichbar einem Einschnitt in den Grundkörper 5 eingebracht.

Desweiteren können ausgehend vom Innern der nutartigen Vertiefung 22 weitere Längsnuten 37 in den Grundkörper 5 eingebracht sein, die sich parallel zu den äußeren Längsnuten 36 erstrecken und deren Tiefenrichtung so orientiert ist, daß sie zum Nutgrund der äußeren Längsnuten 36 ragen. Der zwischen den Nutgründen der einander zugeordneten inneren und äußeren Längsnuten 36, 37 verbleibende Materialbereich des Grundkörpers 5 bildet hierbei die Verformungsbereiche 28, 28'.

Zweckmäßigerweise sind zusätzlich im Bereich beider Schenkel 18, 18' weitere Verformungsnuten 34 vorgesehen, die als Quernuten 38 ausgeführt sind und welche vergleichbar den äußeren Längsnuten 36 in die seitlichen Außenflächen 35, 35' des Grundkörpers 5 eingebracht sind. Ihr Längsverlauf ist allerdings insbesondere rechtwinkelig zu demjenigen der Längsnuten 36 gerichtet, wobei sie sich beim Ausführungsbeispiel parallel zur Tiefenrichtung 42 der nutartigen Vertiefung 22 erstrecken. Vorzugsweise verlaufen die Quernuten 38 lediglich in den Schenkeln 18, 18', wobei sie sich wie abgebildet über die gesamte Höhe des jeweils zugeordneten Schenkels 18, 18' erstrecken, so daß sie einenends zu dem der Basis 17 abgewandten freien Ende eines jeweiligen Schenkels 18, 18' und andernendes zu der an der gleichen seitlichen Außenfläche 35, 35' vorgesehenen Längsnut 36 offen sind.

Die Anzahl der einer jeweiligen seitlichen Außenfläche 35, 35' zugeordneten Quernuten 38 und deren in Längsrichtung der nutartigen Vertiefung 22 gemessener Abstand zueinander wird zweckmäßigerweise in Abhängigkeit von der Baulänge der zu verformenden Schenkel 18, 18' gewählt. Beim Ausführungsbespiel verfügt jeder Schenkel 18, 18' über zwei derartige Quernuten 38.

Die durch die Quernuten 38 voneinander abgeteilten Bereiche eines jeweiligen Schenkels 18, 18' können Verformungsabschnitte 43 bilden, an denen jeweils ein Spannmittel 26 oder Spannelement 27 angreift, um eine von den übrigen Verformungsabschnitten 43 im wesentlichen unbeeinflußte, lokal begrenzte Verformung des betreffenden Schenkels 18, 18' vornehmen zu können. Eine entsprechende Ausgestaltung liegt beim Ausführungsbeispiel vor.

Die Figur 4 macht einen weiteren vorteilhaften Verwendungszweck der Quernuten 38 deutlich. Hier ist die Basis 17 in linearer Verlängerung einer jeweiligen Quernut 38 von einer Befestigungsbohrung 44 durchsetzt, die zum einen auf der der längsseitigen Öffnung 25 entgegengesetzten und beim Ausführungsbeispiel unteren Außenfläche 45 des Grundkörpers 5 ausmündet und zum andern zur zugeordneten äußeren Längsnut 36 hin offen ist. Die der Längsnut 36 zugeordneten stirnseitigen Mündungen eines jeweiligen Paares einer Quernut 38 und einer Befestigungsbohrung 44 fluchten also koaxial. Somit ist es möglich, über eine jeweilige Quernut 38 hinweg ein Befestigungselement, beispielsweise eine Schraube, in die Befestigungsbohrung 44 einzuführen, wobei gleichzeitig ein eventuell vorhandener Kopf des Befestigungselementes in der seitlichen Außenfläche 35, 35' des Grundkörpers 5 versenkt zu liegen kommt.

Die Führungseinheiten 29 könnten aus unmittelbar aneinander anliegenden Gleitflächen bestehen, die von den einander zugewandten Seitenflächen der Läufer 7, 7' und der Schenkel 18, 18' gebildet sind. Auch wäre es denkbar, in die einander zugewandten Seitenflächen nutartige Vertiefungen einzubringen, in denen durch Käfige gehaltene Wälzelemente laufen, wobei sie unmittelbar an den Flächen der Schenkel 18, 18' und der Läufer 7, 7' abrollen. Beim Ausführungsbeispiel ist eine weitere, als besonders vorteilhaft erachtete Bauform verwirklicht, die es ermöglicht, für den Grundkörper 5 ein weniger verschleißfestes Material wie Aluminium zu verwenden, indem die Abwälzflächen 46 für eine Wälzkörperanordnung 47 an separaten Lagerelementen 48 vorgesehen sind.

Wie insbesondere aus Figuren 1 und 4 hervorgeht, enthält eine jeweilige Führungseinheit 29 einen im Innern der nutartigen Vertiefung 22 am Grundkörper 5 vorgesehenen ersten Tragkörper 52 und einen gegenüberliegend im Bereich der zugewandten Seitenfläche des Läufers 7, 7' angeordneten zweiten Tragkörper 53. Die Tragkörper 52, 53 sind zweckmäßigerweise in Längsnuten der Schenkel 18, 18' bzw. Läufer 7, 7' eingesetzt, um eine kompakte Baubreite zu erhalten. Sie bestehen außerdem zweckmäßigerweise aus Kunststoffmaterial.

An jedem Tragkörper 52, 53 sind zwei längsverlaufende und zueinander parallele Taschen vorgesehen, die über eine schlitzartige Öffnung 55 in eine Längsnut 57 übergehen, die sich an der dem jeweils anderen Tragkörper zugewandten Vorderseite des jeweiligen Tragkörpers befindet.

Die sich gegenüberliegenden Längsnuten 56 zweier einander zugeordneter erster und zweiter Tragkörper 52, 53 definieren einen Kanal, in dem die beim Ausführungsbeispiel über Wälzkugeln verfügende Wälzkörperanordnung 47 untergebracht ist. Die Lagerelemente 48 sind stabförmig ausgeführt und rückseitig der Tragkörper 52, 53 in die Taschen 54 eingelegt und ragen mit einem Abschnitt ihres Umfanges durch die schlitzartige Öffnung 55 in die zugeordnete Längsnut 56 hinein, wobei diese Umfangsabschnitte die Abwälzflächen 46 bilden, an denen die Wälzkörperanordnung 47 abläuft. Andererseits stützen sich die Lagerelemente 48 unmittelbar am zugeordneten Grundkörper 5 bzw. Läufer 7,7' ab, so daß die Tragkörper 52, 53 vorzugsweise nicht in direktem Kontakt mit diesen Bauteilen stehen und nicht in Querrichtung belastet werden. Sie dienen zweckmäßigerweise lediglich dazu, die Lagerelemente 48 aufzunehmen und deren Verschiebbarkeit in Längsrichtung zu verhindern sowie eine axiale Anschlagfunktion bezüglich der Wälzkörper auszuüben.

Die Lagerelemente 48 bestehen zweckmäßigerweise aus gehärtetem Stahl und sind auf diese Weise sehr verschleißfest. Außerdem lassen sich die Führungseinheiten sehr einfach montieren. Sie können beispielsweise durch eine Rastverbindung oder durch jede beliebige andere Verbindung am zugeordneten Bauteil befestigt werden.

Bei 58 ist noch eine Abdeckung angedeutet, die beim Ausführungsbeispiel den Übergangsbereich zwischen den beiden Greifelementträgern 8, 8' überdeckt, um insbesondere ein Eindringen von Verunreinigungen zu verhindern.

## Patentansprüche

1. Linearführung, mit einem Grundkörper (5), der eine Basis (17) und zwei unter seitlicher Begrenzung einer nutartigen Vertiefung (22) von der Basis wegragende Schenkel (18, 18') aufweist, mit mindestens einem in die nutartige Vertiefung (22) eingreifenden, relativ zum Grundkörper (5) in Längsrichtung der nutartigen Vertiefung (22) bewegbaren Läufer (7, 7'), und mit im Innern der nutartigen Vertiefung (22) zwischen dem Läufer (7, 7') und den diesen flankierenden Scheinkeln (18, 18') wirkenden Führungsmitteln (12), wobei wischen den beiden Schenkeln (18, 18') wirkende Spannmittel (26) vorhanden sind, die ein elastisches Verformen der Schenkel (18, 18') mit Bezug zur Basis (17) ermöglichen, um im Bereich der Führungsmittel (12) eine variable Einstellung der Breite der nutartigen Vertiefung (22) vornehmen zu können, **dadurch gekennzeichnet, dass** im Bereich eines oder beider Schenkel an der der nutartigen Vertiefung (22) entgegengesetzten Außenfläche (35, 35') des Grundkörpers (5) eine sich parallel zur Längsachse der nutartigen Vertiefung (22) erstreckende Längsnut (36) vorgesehen ist, wobei die Spannmittel (26) auf der der Basis (17) entgegengesetzten Seite der Längsnut (36) am betreffenden Schenkel (18, 18') angreifen derart, daß die Längsnut (36) zwishen den Spannmitteln (26) und der Basis (17) angeordnet ist.

2. Linearführung nach Anspruch 1, **dadurch gekennzeichnet, dass** die Schenkel (18, 18') einstückig mit der Basis (17) verbunden sind.

3. Linearführung nach Anspruch 1 oder 2, **dadurch gekennzeichnet, dass** die Spannmittel (26) wenigstens teilweise von in oder an den beiden Schenkeln (18, 18') verankerten, die nutartige Vertiefung (22) stegähnlich durchquerenden Spannelementen (27) gebildet sind.

4. Linearführung nach Anspruch 3, **dadurch gekennzeichnet, dass** die Spannelemente (27) von Spannschrauben gebildet sind.

5. Linearführung nach einem der Ansprüche 1 bis 4, **dadurch gekennzeichnet, dass** über die Länge der nutartigen Vertiefung (22) verteilt mehrere mit Abstand zueinander angeordnete Spannmittel (26) vorgesehen sind, die insbesondere unabhängig voneinander betätigbar sind.

6. Linearführung nach einem der Ansprüche 1 bis 5, **dadurch gekennzeichnet, dass** sich die Längsnut (36) im Übergangsbereich zwischen dem betreffenden Schenkel (18, 18') und der Basis (17) befindet.

7. Linearführung nach einem der Ansprüche 1 bis 6, **dadurch gekennzeichnet, dass** im Bereich eines oder mehrerer Schenkel (18, 18') an der der nutartigen Vertiefung (22) entgegengesetzten Außenfläche (35, 35') des Grundkörpers (5) mindestens eine sich parallel zur Tiefenrichtung (42) der nutartigen Vertiefung (22) erstreckende Quernut (38) vorgesehen ist.

8. Linearführung nach Anspruch 7, **dadurch gekennzeichnet, dass** der betreffende Schenkel (18, 18') mehrere in seiner Längsrichtung mit Abstand zueinander angeordnete Quernuten (38) aufweist.

9. Linearführung nach Anspruch 7 oder 8, **dadurch gekennzeichnet, dass** der betreffende Schenkel durch die mindestens eine Quernut in mehrere Verformungsabschnitte (43) unterteilt ist, an denen jeweils mindestens ein Spannmittel (26) angreift.

10. Linearführung nach einem der Ansprüche 7 bis 9, **dadurch gekennzeichnet, dass** die Quernutten (38) jeweils mit einer Längsnut (36) zusammentreffen.

11. Linearführung nach einem der Ansprüche 7 bis 10, **dadurch gekennzeichnet, dass** sich die Quernuten (38) über die gesamte Höhe des jeweils zugeordneten Schenkels (18, 18') erstrecken.

12. Linearführung nach einem der Ansprüche 7 bis 11, **dadurch gekennzeichnet, dass** mindestens eine Quernut (38) zum freien Ende des zugehörigen Schenkels (18, 18') hin offen ist, wobei dem der Basis (17) zugewandten entgegengesetzten Ende dieser Quernut (38) die Mündung einer die Basis (17) durchsetzenden Befestigungsbohrung gegenüberliegt.

13. Linearführung nach einem der Ansprüche 1 bis 12, **dadurch gekennzeichnet, dass** die Führungsmittel (12) auf jeder Seite des Läufers (7, 7') über mindestens eine Führungseinheit (29) verfügen, die einen dem Grundkörper (5) zugeordneten ersten Tragkörper (52) und einen dem Läufer (7, 7') zugeordneten zweiten Trägkörper (53) enthalten, wobei jeder Tragkörper (52, 53) wenigstens ein eine Abwälzfläche (46) definierendes stabförmiges Lagerelement (48) trägt und wobei zwischen den Tragkörpern (52, 53) einer jeweiligen Führungseinheit (29) eine an den Lagerelementen (48) anliegende Wälzkörperanordnung (47) vorgesehen ist.

14. Linearführung nach Anspruch 13,**dadurch gekennzeichnet, dass** an jedem Tragkörper (52, 53) zwei zueinander parallele Lagerelemente (48) vorgesehen sind, an denen die Wälzkörperanordnung (47) gleichzeitig anliegt.

15. Linearführung nach Anspruch 13 oder 14, **dadurch gekennzeichnet, dass** die Tragkörper (52, 53) aus Kunststoffmaterial bestehen, während die Lagerelemente zweckmäßigerweise aus gehärtetem Stahl bestehen.

16. Linearführung nach einem der Ansprüche 1 bis 15, **dadurch gekennzeichnet, dass** der Grundkörper (5) Bestandteil des Gehäuses (2) eines fluidbetätigten Greifers (1) ist, wobei der mindestens eine Läufer (7, 7') von einem Greifelement oder einem Greifelementträger (8, 8') des Greifers (1) gebildet ist.

## Claims

1. Linear guide with a main body unit (5) which has a base (17) and, projecting from the base, two arms (18, 18¹) the sides of which end in a groove-like hollow section (22), with at least one slide (7, 7¹) meshing with the groove-like hollow section (22) and movable relative to the main body unit (5) along the length of the groove-like hollow section (22) and with, on the inside of the groove-like hollow section (22), guide means (12) acting between the slide (7, 7¹) and the arms (18, 18¹) running alongside it, whereby tensioning means (26) are available, acting between the two arms (18, 18¹), which enable an elastic reshaping of the arms (18, 18¹) to be made with reference to the base (17), so as to allow a variable setting to be made of the width of the groove-like hollow section (22) in the area of the guide means (12), **characterized in that**, in the area of one or both arms on the outer surface (35, 35¹) of the main body unit (5) opposite the groove-like hollow section (22), a longitudinal groove (36) is provided extending parallel to the longitudinal axis of the groove-like hollow section (22), whereby the tensioning means (26) to the side of the longitudinal groove (36) opposite the base (17) make contact with the arm (18, 18¹) in question, in such a way that the longitudinal groove (36) is positioned between the tensioning means (26) and the base (17).

2. Linear guide according to claim 1, **characterized in that** the arms (18, 18¹) form one piece with the base (17).

3. Linear guide according to claim 1 or 2, **characterized in that** the tensioning means (26) are formed at least partly from tensioning elements (27) fixed in or to both arms (18, 18¹) and crossing the groove-like hollow section (22) in the manner of a bridge.

4. Linear guide according to claim 3, **characterized in that** the tensioning elements (27) are formed from tensioning screws.

5. Linear guide according to one of claims 1 to 4, **characterized in that**, distributed along the length of the groove-like hollow section (22), several tensioning means (26) are provided, positioned at a distance from each other, which, in particular, can be operated independently of one another.

6. Linear guide according to one of claims 1 to 5, **characterized in that** the longitudinal groove (36) is in the area where the arm (18, 18¹) in question and the base (17) meet.

7. Linear guide according to one of claims 1 to 6, **characterized in that**, in the area of one or several arms (18, 18¹), at least one transverse groove (38) is provided on the outer surface (35, 35¹) of the main body unit (5) opposite the groove-like hollow section (22), extending parallel to the downward orientation (42) of the groove-like hollow section (22).

8. Linear guide according to claim 7, **characterized in that** the arm (18, 18¹) in question has several transverse grooves (38) positioned along it at a distance from each other.

9. Linear guide according to claim 7 or 8, **characterized in that** the arm in question is subdivided by at least one transverse groove into several shaped segments (43), with each of which at least one tensioning means (26) makes contact.

10. Linear guide according to one of claims 7 to 9, **characterized in that** the transverse grooves (38) each join up with a longitudinal groove (36).

11. Linear guide according to one of claims 7 to 10, **characterized in that** the transverse grooves (38) extend to the entire height of the arm (18, 18¹) to which each of them relates.

12. Linear guide according to one of claims 7 to 11, **characterized in that** at least one transverse groove (38) is open towards the free end of the arm (18, 18¹) to which it belongs, whereby the opposite end of this transverse groove (38), facing the base (17), lies opposite the opening of a fastening bore, passing through the base (17).

13. Linear guide according to one of claims 1 to 12, **characterized in that** the guide means (12) on each side of the slide (7, 7¹) are equipped with at least one guide unit (29) which contains a first carrying component (52) relating to the main body unit (5) and a second carrying component (53) relating to the slide (7, 7¹), whereby each carrying component (52, 53) carries at least one rod-shaped bearing element (48) constituting a rolling surface (46) and whereby, between the carrying components (52, 53) of one particular guide unit (29) a set of rolling components (47) is provided adjacent to the bearing elements (48).

14. Linear guide according to claim 13, **characterized in that**, on each carrying component (52, 53), two bearing elements (48) parallel to each other are provided, at the same time being adjacent to the set of rolling components (47).

15. Linear guide according to claim 13 or 14, **characterized in that** the carrying components (52, 53) are made of synthetic material, whereas the bearing elements, according to function, are made of tempered steel.

16. Linear guide according to one of claims 1 to 15, **characterized in that** the main body unit (5) is a component of the casing (2) of a fluid-activated gripper (1), whereby at least one slide (7, 7¹) takes the form of a gripping element or a gripping element carrier (8, 8¹) of the gripper (1).

## Revendications

1. Guide linéaire avec un corps de base (5) qui comporte une base (17) et deux côtés (18, 18') partant de la base en délimitant latéralement un renfoncement (22) de type rainure, avec au moins un curseur (7, 7') s'engageant dans le renfoncement (22) de type rainure et déplaçable par rapport au corps de base (5) dans la direction longitudinale du renfoncement (22) de type rainure, et avec des moyens de guidage (12) agissant à l'intérieur du renfoncement (22) de type rainure entre le curseur (7, 7') et les côtés (18, 18') flanquant celui-ci, des moyens de serrage (26) agissant entre les deux côtés (18, 18'), qui permettent une déformation élastique des côtés (18, 18') par rapport à la base (17), étant prévus pour permettre de procéder, dans la zone des moyens de guidage (12), à un réglage variable de la largeur du renfoncement (22) de type rainure, **caractérisé en ce que** dans la zone de l'un ou des deux côtés il est prévu, sur la surface extérieure (35, 35') opposée au refoncement (22) de type rainure, du corps de base (5), une rainure longitudinale (36) s'étendant parallèlement à l'axe longitudinal du renfoncement (22) de type rainure, les moyens de serrage (26) agissant, sur le côté de la rainure longitudinale (36) opposé à la base (17), sur le côté (18, 18') concerné, de manière que la rainure longitudinale (36) soit disposée entre les moyens de serrage (26) et la base (17).

2. Guide linéaire selon la revendication 1, **caractérisé en ce que** les côtés (18, 18') sont reliés d'une seule pièce à la base (17).

3. Guide linéaire selon la revendication 1 ou 2, **caractérisé en ce que** les moyens de serrage (26) sont formés au moins en partie par des éléments de serrage (27) ancrés dans ou sur les deux côtés (18, 18') et traversant à la manière d'une entretoise le renfoncement (22) de type rainure.

4. Guide linéaire selon la revendication 3, **caractérisé en ce que** les éléments de serrage (27) sont formés par des vis de serrage.

5. Guide linéaire selon l'une des revendications 1 à 4, **caractérisé en ce qu'**il est prévu plusieurs moyens de serrage (26) répartis sur la longueur du renfoncement (22) de type rainure et disposés à distance les uns des autres, qui peuvent être actionnés en particulier indépendamment les uns des autres.

6. Guide linéaire selon l'une des revendications 1 à 5, **caractérisé en ce que** la rainure longitudinale (36) se trouve dans la zone de transition entre le côté (18, 18') concerné et la base (17).

7. Guide linéaire selon l'une des revendications 1 à 6, **caractérisé en ce que** dans la zone d'un ou de plusieurs côtés (18, 18') il est prévu, sur la surface extérieure (35, 35') du corps de base (5), opposée au renfoncement (22) de type rainure, au moins une rainure transversale (38) s'étendant parallèlement à la direction de la profondeur (42) du renfoncement (22) de type rainure.

8. Guide linéaire selon la revendication 7, **caractérisé en ce que** le côté (18, 18') concerné présente plusieurs rainures transversales (38), disposées, dans sa direction longitudinale, à distance les unes des autres.

9. Guide linéaire selon la revendication 7 ou 8, **caractérisé en ce que** le côté concerné est divisé par la au moins une rainure transversale en plusieurs tronçons de déformation (43), sur chacun desquels agit au moins un moyen de serrage (26).

10. Guide linéaire selon l'une des revendications 7 à 9, **caractérisé en ce que** les rainures transversales (38) rencontrent chacune une rainure longitudinale (36).

11. Guide linéaire selon l'une des revendications 7 à 10, **caractérisé en ce que** les rainures transversales (38) s'étendent sur toute la hauteur du côté (18, 18') associé.

12. Guide linéaire selon l'une des revendications 7 à 11, **caractérisé en ce qu'**au moins une rainure transversale (38) est ouverte vers l'extrémité libre du côté (18, 18') associé, l'embouchure d'un perçage de fixation traversant la base (17) faisant face à l'extrémité, tournée à l'opposé de la base (17), de cette rainure transversale (38).

13. Guide linéaire selon l'une des revendications 1 à 12, **caractérisé en ce que** les moyens de guidage (12) disposent, sur chaque côté du curseur (7, 7'), d'au moins une unité de guidage (29) qui contient un premier corps de support (52), associé au corps de base (5), et un deuxième corps de support (53) associé au curseur (7, 7'), chaque corps de support (52, 53) portant au moins un élément d'appui (48) de type barrette définissant une surface de roulement (46), et un agencement de corps de roulement (47), s'appliquant contre les éléments d'appui (48), étant prévu entre les corps de support (52, 53) de chaque unité de guidage (29).

14. Guide linéaire selon la revendication 13, **caractérisé en ce que** sur chaque corps de support (52, 53) sont prévus deux éléments d'appui (48) parallèles l'un à l'autre, contre lesquels s'applique en même temps l'agencement de corps de roulement (47).

15. Guide linéaire selon la revendication 13 ou 14, **caractérisé en ce que** les corps de support (52, 53) sont en matière synthétique, tandis que les éléments d'appui sont avantageusement en acier trempé.

16. Guide linéaire selon l'une des revendications 1 à 15, **caractérisé en ce que** le corps de base (5) fait partie intégrante du boîtier (2) d'un préhenseur (1) actionné par fluide, le au moins un curseur (7, 7') étant formé par un élément de préhension ou un support d'élément de préhension (8, 8') du préhenseur (1).
